# EUROPEAN PATENT APPLICATION

(11) **EP 1 491 361 A2**
(43) Date of publication of application: **29.12.2004**
(21) Application number: 04253721.7
(22) Date of filing: 22.06.2004
(51) Int. Cl.: B60B 1/04, B60B 27/02

(54) **A bicycle wheel**

(30) Priority: 25.06.2003 JP 2003181906
(71) Applicant: Tanaka, Toru, Chuo-ku, Osaka 542-0081 (JP)
(72) Inventor: Tanaka, Toru, Chuo-ku, Osaka 542-0081 (JP)
(74) Representative: Hitchcock, Esmond Antony

(57) **Abstract**

A bicycle wheel is disclosed having spokes (4) stretched between a hub (1) and a rim (3). A hub collar surface (6) is provided parallel with the spokes (4) extending from the hub collar (2) towards the rim (3). Hub holes (9) are provided approximately perpendicular to the spokes (4). Spoke insert holes (12) are bored in the outer peripheral surface (14) of the hub collar, and one end of each spoke (4) inserted from the spoke insert hole (12) is threadedly fastened to a hub nipple (8) fitted into the hub hole (9). The other end is fastened at the rim (3).

## Description

This invention relates to bicycle wheels, and particularly wheels of the type having a rim and a hub connected by spokes. In a typical such wheel tension is applied thereto between the hub and the rim by means of a threaded connection between at least one end of each spoke and a nipple fitted to either the hub or the rim.

In a known bicycle wheel construction, spokes under tension integrally couple a rim and a hub. The outer end of each spoke is threadedly fitted in a nipple disposed in the rim, the inner end having its extreme end bent into a J-shape and inserted into spoke insert holes in a collar portion of the hub (hereinafter referred to as "hub collar"). A large diameter portion at the extreme inner end engages with and is stopped at the collar portion. The portion bent into the J-shape of the spokes suffers from fatigue, thus shortening the service life of the spokes. Further, the fact that the hub collar surface is not formed in parallel with the elevation angle formed by the spokes stretched between the rim and the hub also shortens the service life of the spokes because an unbalanced load is applied to the J-shaped portion of the spokes.

An arrangement is known in which a spoke support shaft is inserted into a flange provided on a hub, and an insert hole for engaging one end of the spoke is provided in a large diameter portion of the spoke support shaft. The spoke insert hole is made to be larger than axial diameter of the spoke so that the spoke is tiltable freely at an angle within a fixed range. The other end of the spoke is threadedly engaged, in a linear state, with the nipple of the rim (see Japanese Laid-Open Specification No: 108701/1996. However, in this proposal, it is merely that the spoke insert hole of the spoke support shaft is larger than the diameter of the spoke as described above and is slightly smaller in diameter than the large diameter portion of the spoke end. Durability is therefore, not sufficient due to the force applied to the spokes and the spokes tend to slip out.

"Aerospokes" whose section is flattened in order to reduce air resistance during travelling are sometimes used (see Japanese Laid-Open Specification No: 71856/1979). However, such aerospokes having the section flattened cannot be inserted into normal spoke holes having a diameter of about 2 mm opened to the hub. It is necessary that a slit having a width of 1 to 2 mm is provided in the hub to form a spoke collar. Since the spoke collar is in contact with the slit, it cannot endure against the tension applied to the spokes, and can slip out. Furthermore, an open portion is provided in the spoke hole of the hub for inserting and mounting the aerospoke into the hub. However, since the open portion reduces the strength of the spoke hole, it is necessary to make the periphery of the spoke hole thicker, increasing the weight of the hub.

The rim in a conventional bicycle wheel has a width larger than the rim height. However, recently, a rim having larger height has been developed to take account of air resistance. However, this rim has been used in an otherwise conventional rim in which the number of spoke holes is 32 or 36. The increased rim height increases the longitudinal rim strength in a centrifugal direction by about two times compared with the conventional rim.

If a bicycle wheel has high longitudinal rim strength, it can function with minimal or without vibration even if some of the spokes are loose. This means that even if the spoke tension is somewhat uneven, in theory wheels without vibration can be supplied. However, this is not always accomplished.

According to the present invention, a bicycle wheel comprises a hub and a rim connected by a plurality of spokes, with a rim nipple at the outer end of each spoke and fitted in the rim, the inner ends of the spokes being received in a hub collar having a hub collar surface disposed substantially parallel to the spokes, each inner end having an external screw thread engaging a complementary threaded hole in a hub nipple mounted in a hub hole extending substantially at a right angle to the respective spoke, the hub nipple having an outer peripheral surface matching the internal surface of the hub hole, and the hub collar being formed with spoke insert holes for the passage of the spokes to the hub nipples in the hub holes. The spokes can be stretched to an optimal level, and the number of spokes can also be selected to minimise play, and achieve high durability.

In most embodiments of the invention the hub collar includes a peripheral restraint wall on either side of the spoke insert holes. It is also preferred that the outer end of each spoke has an external thread engaging a complementary internal thread in a rim nipple. The screw threads at the inner and outer ends of each spoke are normally of opposite senses.

In a particular embodiment of the invention the spoke insert holes and the respective threaded holes in the hub nipples are arranged in two axially spaced peripheral rows in the hub. The complementary threaded hole in each hub nipple can be axially displaced from its central cross-section.

In wheels according to the invention, the rim of the bicycle wheel preferably has a rim height at least equal to the rim width. The rim height is normally not less than 20 mm. The number of spokes preferably comprises a multiple of 4, typically in the range 16 to 28.

In a typical wheel according to the present invention, the hub collar surface is formed approximately in parallel with the elevation angle on the spokes stretched between the hub and the rim. The hub hole for inserting and mounting the spokes into the hub collar is approximately at a right angle to the respective spokes, and is open to the hub collar surface. The hub nipples are fitted into the hub holes, and the spokes are threadedly fastened to the hub nipples, thus stretching the spokes in a linear form between the hub and the rim. If the slits in the outer periphery of the hub collar for stretching the spokes are formed in two axially adjacent rows, the spokes can be arranged alternately (in a zigzag manner) so that the spokes are not in contact when they cross, thus enhancing the strength and saving some weight. Since the spokes can be stretched while enhancing the strength as described, the number of spokes can be reduced to 16 to 28 as compared with the conventional bicycle wheel, with a consequent weight saving.

The invention will now be described by way of example and with reference to the accompanying drawings, in which:
Figure 1 is a view schematically showing a mounting construction or a rim and a spoke relative to a hub of a cycle wheel according to the invention, showing the hub partly in section;

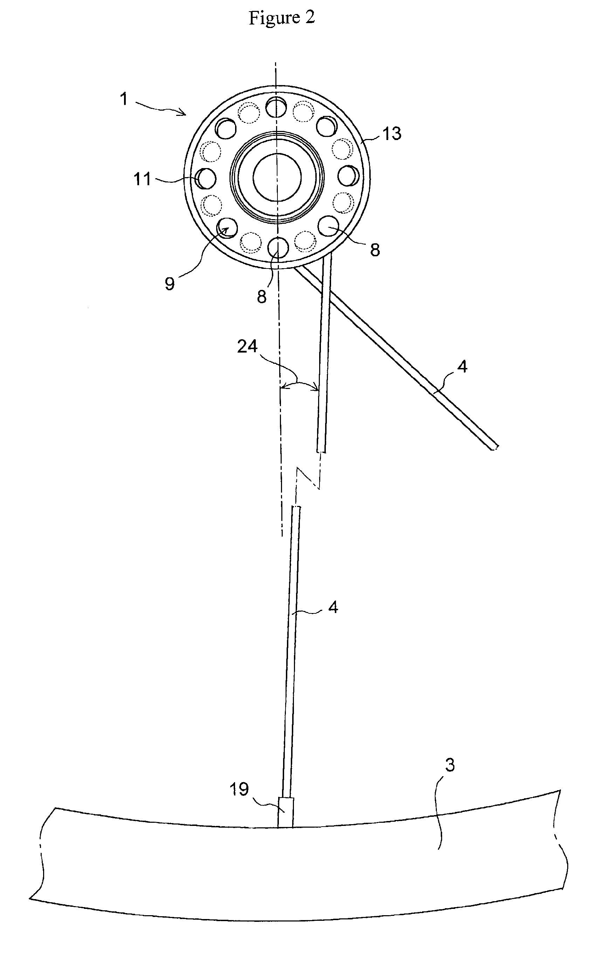

Figure 2 is a side view schematically showing the coupling between the hub and the rim in the wheel of Figure 1;

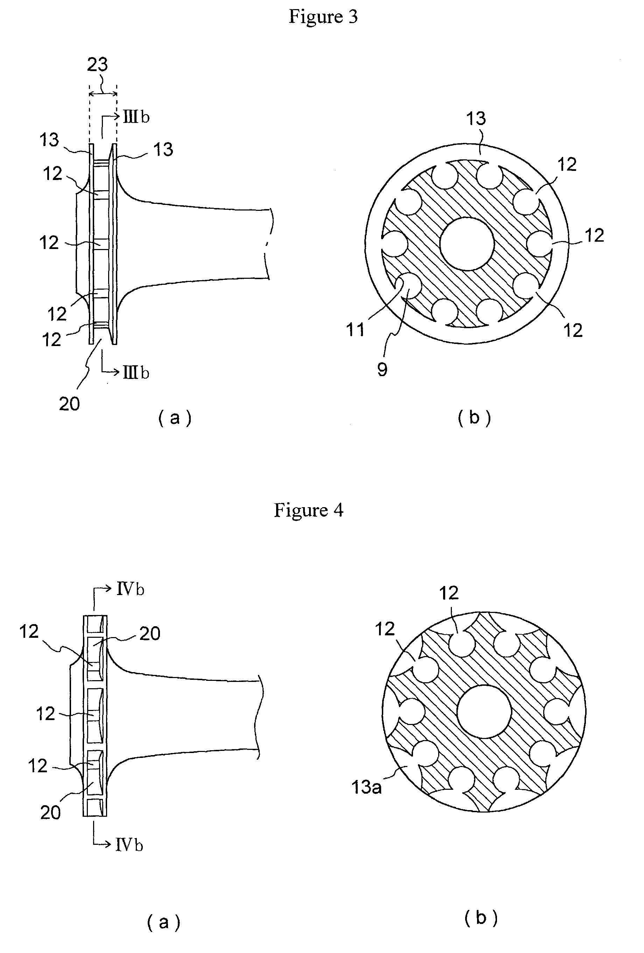

Figures 3(a) and 3(b) are respectively schematic views, 3(a) showing one hub of a wheel, according to the invention, Figure 3(b) being a view taken on line IIIb-IIIb;
Figures 4(a) and 4(b) are respectively schematic views showing the construction of a hub of another wheel according to the invention, Figure 4(b) being a view taken on line IVb-IVb;
Figure 5 is a side view of a wheel according to the present invention;
Figure 6 is a partly broken view showing a hub of a 2-row slit cutaway according to an alternative embodiment of the present invention;

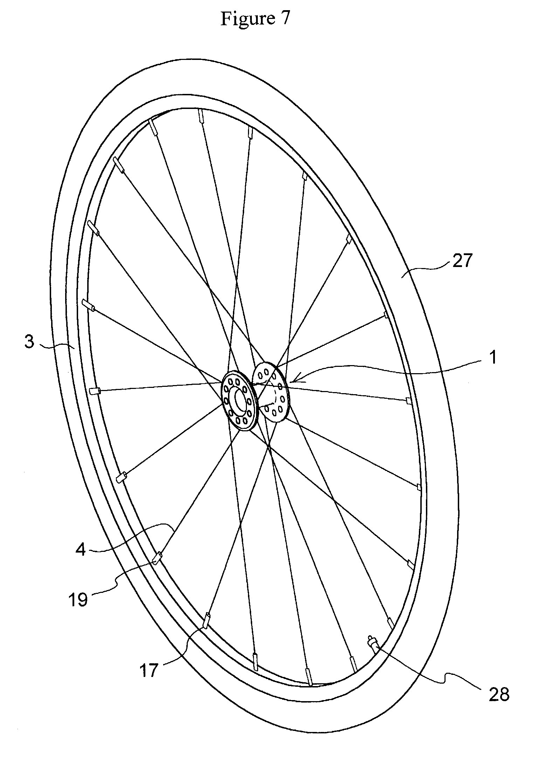

Figure 7 is a perspective view showing the complete wheel shown in Figure 1;

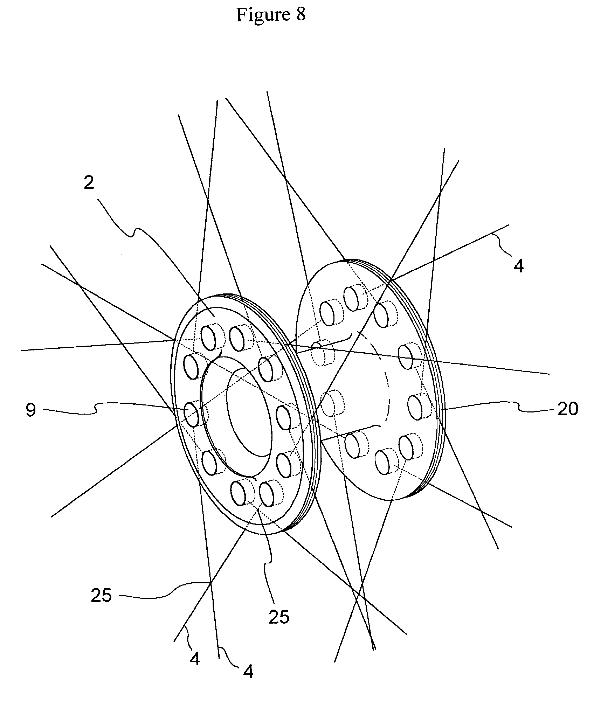

Figure 8 is a perspective view showing the mounting of a hub having the one row slit and spokes (Figure 1);

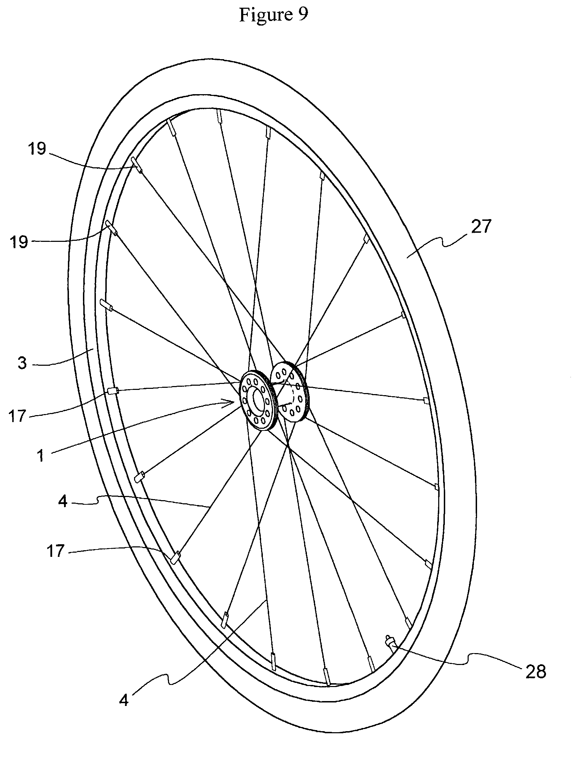

Figure 9 is a perspective view showing a complete wheel using the hub shown in Figure 6;

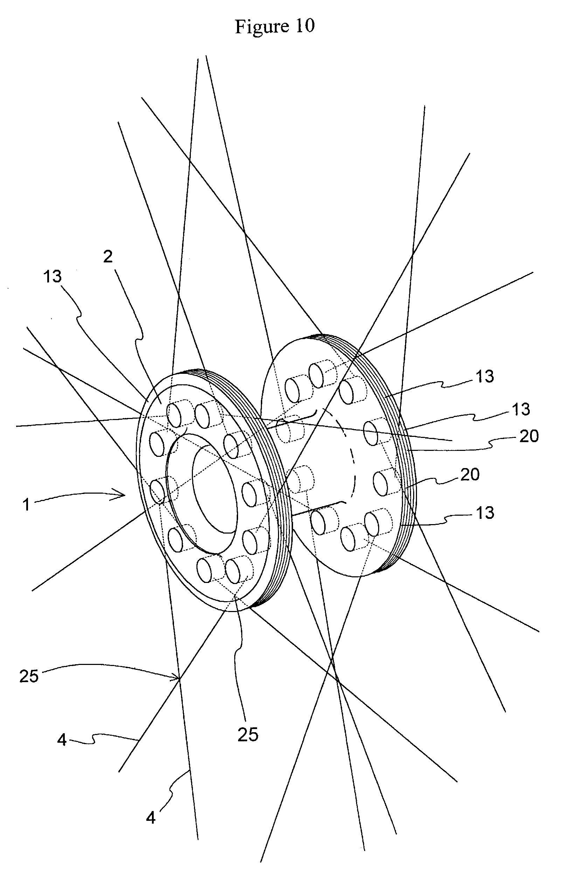

Figure 10 is a perspective view showing the mounting of the hub having the 2-row slit and spokes (Figure 6);

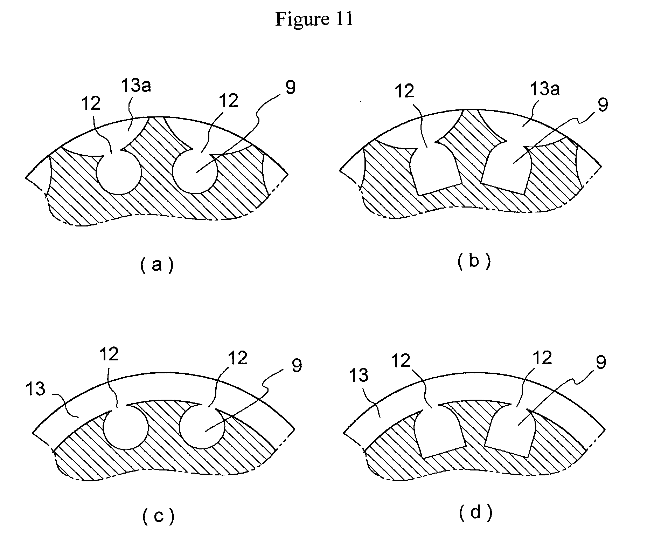

Figures 11(a), 11(b) and 11(c), 11(d) are respectively sectional views showing part of a hub collar surface formed with hub holes of the different shape for mounting hub nipples, (a) and (b) being examples having no continuous peripheral restraint wall, (c) and (d) being examples having a continuous peripheral restraint wall;
Figures 12 (a) to (d') are sectional and perspective views of various hub nipples of different shapes; and

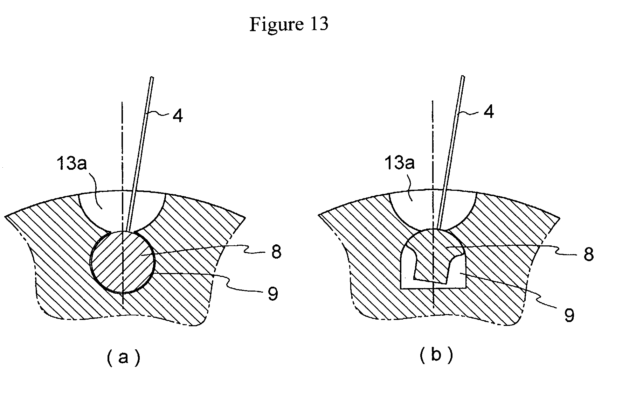

Figures 13(a) and 13(b) are sectional views in which the hub nipples shown in Figures 12(a) and 12(b) are fitted in the hub holes shown in Figures 11(a) and 11(b) with spokes inserted.

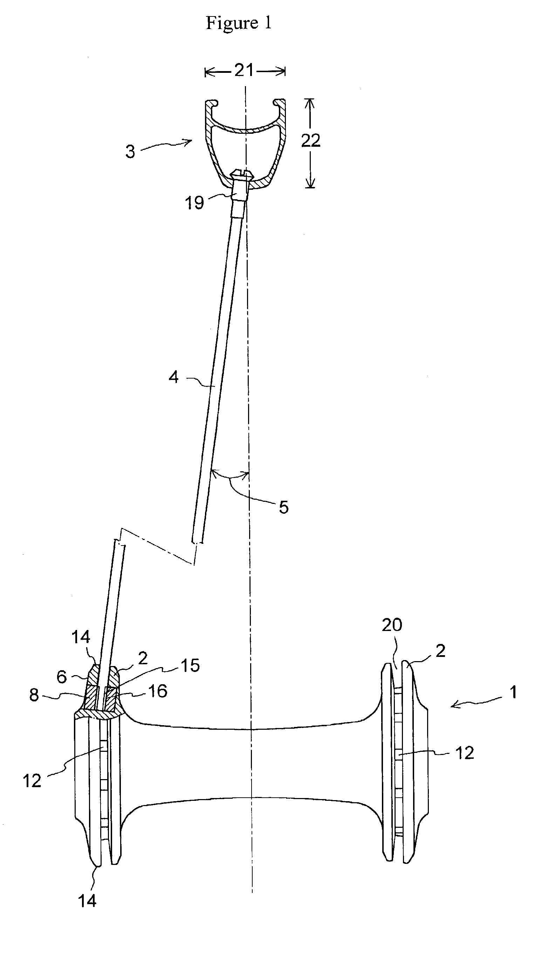

The bicycle wheel of Figure 1 is formed with a hub collar 2 projected ringwise in a centrifugal direction on the outer circumference of both ends of a hub 1, and a spoke 4 is disposed and connected between the hub collar 2 and a rim 3. A hub collar surface 6 is formed on the hub 1 approximately parallel with an elevation angle 5 between the spoke 4 stretched between the hub collar 2 and the rim 3 and the plane of the rim. A hub hole 9 is provided extending through approximately at a right angle to the spoke or the complement to the elevation angle 5 in order to receive a hub nipple 8 formed on a circular body 7. The outer peripheral surface 10 of the circular body 7 of the hub nipple 8 is formed to have approximately the same shape having a diameter matching that of an inner peripheral surface 11 of the hub hole 9. An outer peripheral surface 14 of the hub collar 2 is formed with a spoke insert hole 12 into which the spoke 4 is inserted, the spoke insert hole 12 being bored to the inner peripheral surface 11 of the hub hole 9. A peripheral restraint wall 13 having the spoke insert hole 12 interposed and opposite left and right thereof is stood upright ringwise on the outer peripheral surface 14 of the hub collar 2. The peripheral restraint wall 13 is provided to stabilise the engagement of the spoke 4 with the hub 1.

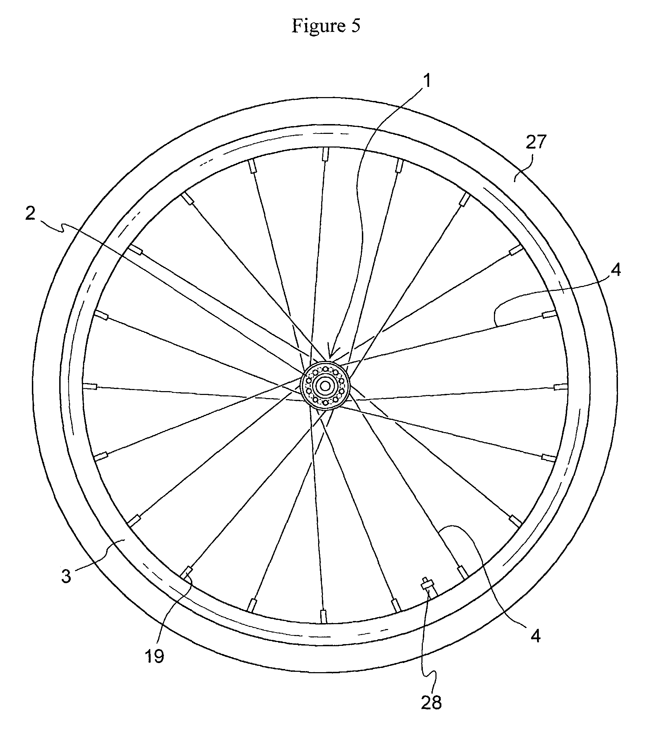

The spokes 4 are formed with external threads 15 on both ends thereof, and the external thread 15 on one end of the spoke 4 is fastened to internal thread 16 provided on the circular body 7 of the hub nipple 8 inserted from the spoke insert hole 12 side and fitted into the hub hole 9. Further, in this embodiment a rim nipple 19 having matching internal threads 16 is mounted in a spoke hole 17 formed in the rim 3 from the outside of the rim 3. The external threads 15 on the other end of the spoke 4 are fastened to the internal thread 16 of the rim nipple 19 mounted into the rim 3. With the hub 1 and the rim 3 connected by the spokes 4, a tyre 27 may be fitted in the rim 3 of the wheel, as shown in Figure 5, the rim 3 having an additional opening for an air valve 28.

The connection of the rim 3 and the hub 1 by a plurality of spokes 4 creates spoke crossings in which intermediate portions thereof are crossed, similarly to the assembly of a normal bicycle.

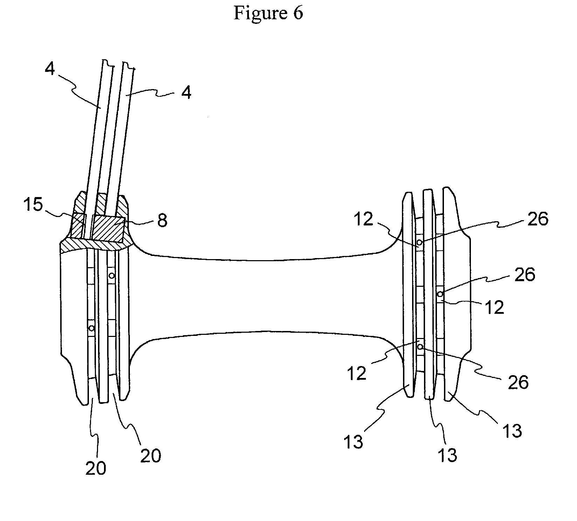

In the embodiment of the invention illustrated in Figure 6 the spoke insert holes 12 for receiving the spokes 4 are disposed alternately (in a zigzag manner) in two rows to left and right and bored into the hub hole 9, with 3-row peripheral restraint walls 13, and with the spoke insert holes 12 in 2-row to left and right interposed. By doing so, the spokes 4 are not in contact in the spoke crossings in which the spokes are disposed in 2-row to left and right, and sufficient tension may accordingly be applied evenly. In other details the hub of Figure 6 is similar to that of the hub in Figure 1.

The spokes 4 used in wheels of the invention are normally formed with an external thread 15 on both ends. The threads 15 on one end typically extend to 4 to 7 mm from the end, which is sufficient to be threadedly fastened to the hub nipple 8. The external thread 15 on the other end thereof can be of the opposite sense, and extend 8 to 12 mm from the end, to be threadedly fastened to the rim nipple 19. These spokes 4 are threadedly fastened to the hub nipple 8 and the rim nipple 19, respectively, and stretched by applying tension between the hub 1 and the rim 3 to firmly connect the hub 1 and the rim 3.

The hub collar 2 in a wheel of the invention may have a collar width 23 of a thickness of 5 to 8 mm. The hub collar surface 6 is formed in a surface approximately at the elevation angle 5, typically 2° to 10°.

In another feature of the invention the inner peripheral surface 11 of the hub hole 9 formed approximately at a right angle to the hub collar surface 6 is formed to be circular having approximately the same diameter as that of the circular body 7 of the hub nipple 8. The spoke insert hole 12 bored in a direction of a wheel axis from the outer peripheral surface 14 of the hub collar 2 and reaching the inner peripheral surface 11 of the hub hole 9 is formed into a slit 20 between the peripheral restraint walls 13.

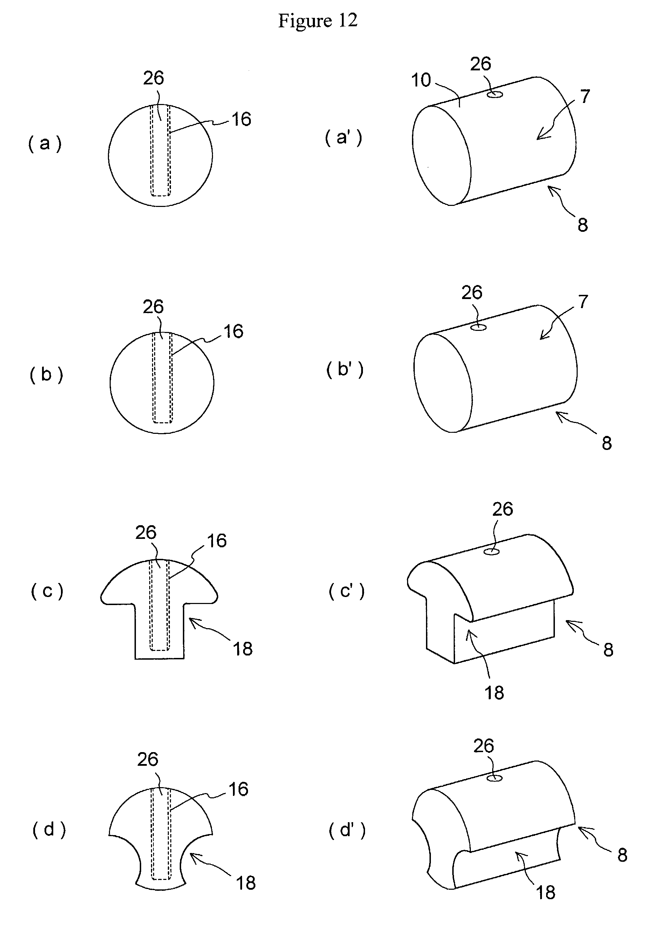

The length of the circular body 7 of the hub nipple 8 can be the same as or somewhat shorter than or longer than the thickness of the collar width 23 of the hub collar 2. When threadedly fastened to the internal threads 16 the spoke 4 preferably does not extend through the hub nipple 8. As shown in Figure 12 the hole 26 in the nipple 8 is itself closed.

In an assembled wheel of the invention, the spokes 4 are threadedly fastened to the spoke threaded hole 26 of the circular body 7 of the hub nipple 8, and the circular body 7 of the hub nipple 8 is fitted into the hub hole 9 opened to the hub collar surface 6 approximately at a right angle to the elevation angle 5 between the rim 3 and the hub collar 2. The spokes 4 are threadedly fastened to the spoke threaded hole 26 opened to the circular body 7 of the hub nipple 8 shaped to be rotatable in the direction of the plane angle 24. The spokes 4 are stretched while being applied with tension without being bent between the hub collar 2 and the rim 3. The threaded hole 26 of the hub nipple 8 fitted in the hub hole 9 can be central of the circular body 7 or be displaced to one or other end.

In the above described embodiments, the spokes 4 of the bicycle wheel according to the present invention are coupled in conventional manner to a conventional rim. The engagement with the hub 1 is carried out by the hub nipple 8 comprising the circular body 7, and the hub nipple 8, and the spokes 4 are threadedly fastened in the spoke threaded holes 26. The circular shape of the hub nipple 8, means that even if the spokes 4, being provided with the hub collar 2 and the plane angle 24 are crossed, they can be freely rotated laterally by the circular body 7, and therefore, even if the plane angle 24 is provided, the spokes 4 can be stretched between the hub 1 and the rim 3 while maintaining a linear form. Because of this, even if tension is applied to the spokes 4, tension can be applied evenly to the spokes 4 without play of all the spokes 4 stretched on the wheel. Accordingly, since no useless spokes 4 with play are present, it is not necessary to stretch many spokes like a rim having 32 holes or 36 holes as in the convention bicycle, thus reducing the weight of the wheel by that portion.

Similarly, in the arrangement which uses the hub nipple 8 in the present invention, the hub collar surface 6 is formed in parallel with the elevation angle 5 formed by the spokes 4, and the hub holes 9 for inserting and mounting the hub nipple 8 are approximately at a right angle to the respective spokes. Therefore, the spokes 4 threadedly engaged with the hub nipple 8 can be also stretched between the hub 1 and the rim 3 while maintaining a linear form.

Where the peripheral restraint walls 13 provided in the circumferential direction on the outer peripheral surface 14 of the hub collar 2 having the hub nipple 8 inserted and mounted therein, are of two rows on left and right, eight to fourteen spokes 4 are inserted and mounted in one row in the slit 20 between the two rows on left and right. The spokes 4 inserted and mounted in one row as described will cross and be in contact at the spoke intersections 25, and as a consequence are somewhat bent thereat.

However, as described above, where three-wall peripheral restraint walls 13 are provided on the outer peripheral surface 14 of the hub collar 2 and two-row slits 20 are provided in parallel, whereby the spokes 4 are inserted into the two slits 20 alternately (in a zigzag manner), the crossed spokes 4 are stretched between the hub 1 and the rim 3 while maintaining the linear form without contacting each other at the spoke intersection 25, thus further enhancing the strength of the wheel. By doing so, the spokes 4 with play produced in the above-described conventional wheel can be overcome, and the number of the spokes 4 to be stretched on the wheel can be reduced to a multiple of 4; 16 to 28, as a result of which the weight of the wheel can be reduced.

When the two-row parallel slits 20 are employed as described, in the hub nipple 8, the spoke threaded hole 26 is located toward the end of the circular body 7, as shown in Figures 12(b) and (b'). Where the spokes 4 are inserted from the right slit 20 out of two-row slits 20 and where the spokes 4 are inserted from the left slit 20, the hub nipple 8 is inverted so that they can be adapted to the respective positions. On the other hand, where the width of the slit 20 is sufficiently narrow, the length of the circular body 7 of the hub nipple 8 can be shortened, in which case, therefore, when the spoke threaded hole 26 is provided in the centre of the length of the circular body as shown in Figure 12 (a') so that the spokes 4 may pass through the left and right slits 20, the length of the circular body 7 is shortened so as to prevent them from flying out from the surface of the hub collar 2.

In the structure in which two-row peripheral restraint walls 13 opposed with the spoke insert hole 12 interposed therebetween are stood upright, the length of the circular body 7 of the hub nipple 8 is made longer than the width 23 of the collar 2 or the width of the slit 20. The spoke threaded hole 26 is provided in the centre of the circular body 7 as in Figure 12 (a'), and the hub nipple 8 is moved to and disposed at a position that the spokes 4 are to be alternate (a zigzag state). It is noted of course that the hub nipple 8 in which the width of the circular body 7 is made longer than the width 23 of the collar 2 or the width of the slit 20 may be also used for the structure in which there are three peripheral restraint walls 13.

The shape of the hub hole 9 provided in the hub collar 2 can be made, other than a circle, such that only the portion in the centrifugal direction is a circular and the wheel shaft side is a square. The shape of the hub nipple 8 can be also made, adjusting to the shape of the former, such that as shown in Figure 12 (c) and (d), the upper portion in the centrifugal direction from the circular body 7 is an arc. The side portion on the wheel shaft side is a notch portion 18 recessed in the form of an arc, which can be light-weighted by a portion of the recessed notch 18.

While the slit 20 formed in the outer peripheral surface 14 of the hub collar 2 can be formed around on the whole surface of the outer peripheral surface of the hub collar 2 as described above, it is noted the slit 20 is partly formed only in front and behind of the spoke insert hole 12 for inserting and mounting the spokes 4. The spokes 4 can be stretched without trouble by providing crossing with an angle of the elevation angle 24. By doing so, it is not necessary to provide the peripheral restraint walls 13 on the whole circumference, but local restraint walls 13a are partly formed only in the circumference of the spoke insert holes 12 to enable strengthening the hub 1 by that portion.

## Claims

1. A cycle wheel comprising a hub (1) and a rim (3) connected by a plurality of spokes (4), with a rim nipple (19) at the outer end of each spoke and fitted in the rim, the inner ends of the spokes (4) being received in a hub-collar (2) having a hub collar surface (6) disposed substantially parallel to the spokes, each inner end having an external screw thread engaging a complementary threaded hole in a hub nipple (8) mounted in a hub hole (9) extending substantially at a right angle to the respective spoke, the hub nipple having an outer peripheral surface matching the internal surface of the hub hole (9), and the hub collar being formed with spoke insert holes (12) for the passage of the spokes (4) to the hub nipples (8) in the hub holes.

2. A cycle wheel according to Claim 1 wherein the hub collar (2) includes a peripheral restraint wall (13) on either side of the spoke insert holes (12).

3. A cycle wheel according to Claim 1 or Claim 2 wherein the outer end of each spoke has an external thread engaging a complementary internal thread in a rim nipple 19.

4. A cycle wheel according to Claim 3 wherein the screw threads at the inner and outer ends of each spoke (4) are of opposite senses.

5. A cycle wheel according to any preceding Claim wherein the spoke insert holes (12) and the respective threaded holes in the hub nipples (8) are arranged in two axially spaced peripheral rows in the hub (1).

6. A cycle wheel according to Claim 5 wherein the complementary threaded hole (26) in each hub nipple is axially displaced from its central cross-section.

7. A cycle wheel according to Claim 5 or Claim 6 including a restraint wall (13) between said axially spaced rows.

8. A cycle wheel according to any preceding Claim wherein the matching peripheral surfaces of the hub nipples (8) and the hub holes (9) are cylindrical, and the spoke insert holes (12) are formed into slits.

9. A cycle wheel according to any preceding Claim wherein each hub nipple (8) has a length less than, substantially equal to or longer than the width of the hub collar (2).

10. A cycle wheel according to any preceding Claim wherein the hub collar surface extends at an angle of 2° to 10° to the plane of the wheel.

11. A cycle wheel according to any preceding Claim wherein the cross-section of the rim has a height at least equal to its width.

12. A cycle wheel according to any preceding Claim wherein the cross-section of the rim has a height not less than 20mm.

13. A cycle wheel according to any preceding Claim wherein the number of spokes is a multiple of 4.
